# EUROPÄISCHE PATENTSCHRIFT

(11) **EP 4 294 743 B1**
(45) Veröffentlichungstag und Bekanntmachung des Hinweises auf die Patenterteilung: **04.12.2024**
(21) Anmeldenummer: 22708864.8
(22) Anmeldetag: 15.02.2022
(51) Int. Cl.: B65D 83/00

(54) **KARTUSCHE**
CARTRIDGE
CARTOUCHE

(30) Priorität: 16.02.2021 CH 1482021
(43) Veröffentlichungstag der Anmeldung: 27.12.2023
(73) Patentinhaber: ALPLA Werke Alwin Lehner GmbH & Co. KG, 6971 Hard (AT)
(72) Erfinder: BOHLE, Thomas, 6861 Alberschwende (AT); KÜNZ, Johann, 6971 Hard (AT)
(74) Vertreter: Swisspat Riederer Hasler Patentanwälte AG
(86) Internationale Anmeldenummer: PCT/EP2022/053697
(87) Internationale Veröffentlichungsnummer: WO 2022/175277

(56) Entgegenhaltungen:
- WO-A1-2020/185174
- CN-U- 204 021 567
- DE-A1- 102008 017 104
- DE-A1- 4 423 261
- FR-A5- 2 070 523
- US-A- 5 593 066

## Beschreibung

### Gebiet der Erfindung

Die Erfindung betrifft eine Kartusche hergestellt aus einem Kunststoffmaterial zur Verwendung in einer handelsüblichen Kartuschenpresse gemäss Oberbegriff des Anspruchs 1, ein Set einer solchen Kartusche mit einem Kolben und einer Düse und ein Verfahren zur Herstellung einer solchen Kartusche gemäss Oberbegriff des Anspruchs 19.

### Stand der Technik

Aus dem Stand der Technik sind seit langer Zeit Kartuschen bekannt, in welche beispielsweise Sanitär-Silikon oder Klebstoff abgefüllt wird. Die Kartusche weist ein erstes und ein zweites Ende auf. An dem ersten Ende ist ein Schraubfortsatz mit einem Aussengewinde und einem Deckel ausgeformt. Das zweite Ende ist offen und besitzt demnach eine Einfüllöffnung. In die Einfüllöffnung wird nach der Produktbefüllung ein Kolben eingesetzt.

Zum Auspressen des Produktes wird der Deckel abgeschnitten und eine Düse auf den Fortsatz aufgeschraubt. Die Kartusche wir in eine Kartuschenpresse eingesetzt und die Kartusche ist einsatzbereit. Damit die Kartusche in eine handelsübliche Kartuschenpresse passt, sind die Abmessungen der Kartusche mehr oder weniger genormt.

Die Kartusche wird in teuren Werkzeugen spritzgegossen. Weil spritzgegossene Kartuschen einlagig ausgeführt sind, d.h. dass die Wandstärke durchgängig aus einer einzigen Schicht besteht, muss durch die Materialwahl und durch die Wahl der Wandstärke für eine möglichst lange Haltbarkeit des Produktes gesorgt werden. Dadurch weist eine solche Kartusche in der Regel auf Kosten eines erhöhten Materialeinsatzes gute Barriereeigenschaften auf. Typischerweise werden Kartuschen mit sehr guten Barriereeigenschaft aus Polyamid gespritzt oder es wird die Wandstärke bei Verwendung von Polyethylen oder Polypropylen oder dergleichen so erhöht, dass die gewünschte Barrierewirkung erreicht wird.

Weil spritzgegossene Kartuschen nicht vollständig restentleert werden können, müssen gebrauchte Kartuschen getrennt gesammelt und entsorgt werden, denn ein Recycling derselben ist kaum möglich, weil typisches Füllgut für Kartuschen Silikone und Klebstoffe sind und die Reste dieser Füllgüter eine Verschmutzung darstellen, die eine wirtschaftlich sinnvolle Aufbereitung des für die Kartusche verwendeten Kunststoffes nahezu unmöglich macht. Entsprechend den Marktbedürfnissen soll eine Kartusche weiß sein. Nachdem recyceltes Kunststoffmaterial, auch wenn es aus anderen Quellen als Kartuschen stammt, immer eine Verschmutzung aufweist, ist es nahezu unmöglich, eine Kartusche aus Recyclingmaterial in weißer Farbe herzustellen.

In der US 5,593,066 ist eine coextrusionsblasgeformte Kartusche offenbart, bei welcher Polyethylen, Polypropylen usw. mit einem eine Barriereschicht bildenden Material coextrudiert wird.

### Aufgabe der Erfindung

Aus den Nachteilen des beschriebenen Stands der Technik resultiert die Aufgabe eine gattungsgemässe Kartusche zu schaffen, bei deren Herstellung recyceltes Kunststoffmaterial verarbeitet werden kann.

Eine weitere Aufgabe besteht darin, eine Kartusche zu zeigen, welche mit einem möglichst geringen Materialeinsatz herstellbar ist, trotzdem eine ausreichende mechanische Stabilität besitzt und das Produkt in der Kartusche lange lagerfähig ist.

### Beschreibung

Die Lösung der gestellten Aufgabe gelingt bei einer Kartusche hergestellt aus einem Kunststoffmaterial zur Verwendung in einer handelsüblichen Kartuschenpresse durch die im kennzeichnenden Abschnitt des Patentanspruchs 1 angeführten Merkmale. Weiterbildungen und/oder vorteilhafte Ausführungsvarianten sind Gegenstand der abhängigen Patentansprüche.

Die Erfindung zeichnet sich bevorzugt dadurch aus, dass die zweite Schicht aus einem recycelten Kunststoff besteht. Diese Schichtkombination hat den Vorteil, dass einerseits Kunststoffmaterial aus recycelten Kartuschen als zweite Schicht aufgearbeitet werden kann und die erste Schicht die Anforderungen der Konsumenten bezüglich des Erscheinungsbildes, insbesondere der Farbe der Kartusche erfüllt, welche Anforderungen von der zweiten Schicht nicht erfüllt werden können. Beispielsweise ist nur mit sehr großem Aufwand möglich, einen recycelten Kunststoff in weisser Farbe herzustellen, da der aufbereitete Kunststoff zwangsläufig andere Farbpartikel enthält.

Die Erfindung zeichnet sich zusätzlich dadurch aus, dass die Kartusche eine dritte Schicht aufweist, welche aus einem neuen Kunststoff hergestellt ist und die zweite Schicht zwischen der ersten und der dritten Schicht angeordnet ist. Da recycelter Kunststoff nach der Extrusion in der Regel eine etwas rauer Oberfläche aufweist, kann dieser zusammen mit dem Kolben keine ausreichend Dichtung des Innenraumes, welcher mit Produkt gefüllt ist, ermöglichen. Da ein neuer Kunststoff in der Regel eine glattere Oberfläche besitzt, ist die Einbettung der zweiten Schicht zwischen der ersten und der dritten Schicht für eine zuverlässige Abdichtung des Innenraumes der Kartusche notwendig. Da die dritte Schicht vor allem dazu vorgesehen ist eine glatte Innenwand des Mantels bereitzustellen, kann die dritte Schicht vergleichsweise dünn ausgeführt sein.

Als zweckdienlich hat es sich erwiesen, wenn die erste Schicht aus einem neuen Kunststoff, bevorzugt in weisser Farbe, hergestellt ist. Dadurch können die unterschiedlichsten Konsumentenanforderungen an das Erscheinungsbild einer Kartusche erfüllt werden und trotzdem kann ein Teil der Kartusche aus recyceltem Kunststoff bestehen.

Die Erfindung zeichnet sich auch bevorzugt dadurch aus, dass die Kartusche eine Barriereschicht aufweist, welche zwischen einer ersten und zweiten Klebeschicht angeordnet ist und die Barriereschicht mitsamt der Klebeschichten innerhalb der ersten Schicht angeordnet ist. Dadurch lässt sich eine zuverlässige Barrierewirkung der Kartusche herstellen, welche den Barriereeigenschaften einer spritzgegossenen Kartusche zumindest entspricht. Produkte, welche in der erfindungsgemässen Kartusche abgefüllt sind, haben daher eine lange Lagerfähigkeit. Außerdem gilt für Kartuschen für Füllgüter, welche gegenüber der Umgebungsluft mit einer Barriereschicht abgeschirmt sind, also beispiels weise für Füllgüter wie Klebstoffe oder Dichtungsmassen, dass die Summe der Schichtdicken bei erfindungsgemäßen Kartuschen kleiner ist als die Wandstärke einer üblichen spritzgegossenen Kartusche, wodurch Materialeinsparungen möglich sind.

Zweckmässigerweise ist die Barriereschicht mitsamt der Klebeschichten zwischen der ersten und der zweiten Schicht angeordnet. In dieser Anordnung ist die Barriereschicht besonders wirksam, da die Barriereschicht bevorzugt näher zur Aussenwand angebracht wird, um die maximale Gasbarriere zu erzielen. Der Grund ist darin zu sehen, dass diffusionsfähige Medien vom Behälterinneren nach aussen zuerst eine dickere Kunststoffschicht überwinden muss, bevor es zur Sperrschicht kommt.

Als vorteilhaft hat es sich erwiesen, wenn die Barriereschicht aus Ethylen-Vinylalkohol-Copolymer (EVOH) besteht. Da EVOH eine sehr gute Barriereeigenschaft gegenüber Sauerstoff besitzt, wird das Produkt zuverlässig vor einem Kontakt des in der Luft vorhandenen Sauerstoffs abgehalten. Auch kann Feuchtigkeit aus dem Produkt nicht ent weichen. Dadurch besitzt das Produkt in der Kartusche, insbesondere wenn diese originalverschlossen ist, eine lange Lagerfähigkeit. Alternativ ist auch der Einsatz von Polyamid als Barriere möglich.

In einer weiteren bevorzugten Ausführungsform der Erfindung machen die erste Schicht und die dritte Schicht jeweils höchstens 20 Gew%, bevorzugt 10 Gew% des Kartuschengewichts aus und die dritte Schicht macht bis zu 80 Gew% des Kartuschengewichts aus. Diese Gewichtsverteilung der Schichten ermöglicht es, dass die zweite recycelte Schicht einen möglichst grossen Anteil des eingesetzten Kunststoffes ausmacht und die erste und dritte Schicht aus neuem Kunststoff nur einen so grossen Anteil ausmachen, wie dies für die funktionellen Anforderungen notwendig ist.

In einer weiteren bevorzugten Ausführungsform der Erfindung beträgt die Wandstärke des Mantels, welche sich aus der Summe der Schichtdicken ergibt, bevorzugt zwischen 0,7 mm und 2,1 mm und bevorzugt zwischen 0,9 mm und 1,5 mm. Vergleicht man herkömmliche Kartuschen für ein bestimmtes Füllgut mit erhöhten Barriereeigenschaften mit einer erfindungsgemäßen Kartusche, welche für dasselbe Füllgut bestimmt ist, so ist dieser Wandstärkenbereich der erfindungsgemäßen Kartusche geringer als die Wandstärke einer herkömmlichen, handelsüblichen spritzgegossenen Kartusche. Dementsprechend kostengünstig ist der Materialeinsatz, welcher noch dazu zu einem signifikanten Anteil aus einem kostengünstigeren recycelten Kunststoff besteht.

Zweckmässigerweise ist das Entnahmeelement ein Fortsatz mit einem Aussengewinde und einer abschneidbaren Kappe, wobei die Kappe mit einem Halteband an dem ersten Ende gehalten ist. Dadurch ist die Kappe nach dem Abschneiden unverlierbar an dem Mantel gehalten und wird zusammen mit dem Mantel entsorgt.

In einer weiteren bevorzugten Ausführungsform der Erfindung ist das Entnahmeelement eine Düse, welche Düse sich von dem ersten Ende weg verjüngt und an ihrem freien Ende verschlossen ist. Dadurch, dass die Düse einstückig mit dem Mantel ausgeformt wird, muss der Benutzer beim Erstgebrauch keine separate Düse aufschrauben, sondern die Kartusche ist nach dem Abschneiden der Düsenspitze sofort einsatzbereit. Die blasgeformte Düse kann verschiedene Längen aufweisen, je nachdem wie lange die Negativform der Düse in dem Werkzeug ist.

Zweckmässigerweise sind an der Düse eine Mehrzahl von entlang der Längserstreckung der Düse angeordneten Schneidlinien vorgesehen, an welchen die Düse abschneidbar ist. Dadurch lässt sich je nach der gewählten Schneidlinie, an welcher die Düsenspitze abgeschnitten wird, ein Produktstrang mit einem bestimmten Durchmesser aus der Kartusche pressen. An den Schneidlinien kann der entsprechende Innendurchmesser der Düse angeführt sein, um die Benutzerfreundlichkeit der Kartusche zu verbessern.

In einer besonders bevorzugten Ausführungsform der Erfindung hat die Düse an ihrem dem ersten Ende zugewandten Ende ein Verbindungsstück mit einem Aussengewinde ausgebildet. Dadurch kann die Düse, falls in dieser Produkt eingetrocknet ist, oberhalb des Verbindungsstückes abgeschnitten werden. Dann kann auf das Verbindungsstück eine separate Düse aufgeschraubt werden.

Als vorteilhaft erweist es sich, wenn in Längsrichtung des Mantels ein transparenter Streifen zur Füllstandskontrolle des Produktes eingearbeitet ist. Dieser Streifen lässt sich mit wenig Aufwand beim Extrudieren der Schichten einarbeiten. Der Benutzer kann die Produkthöhe und die Position des Kolbens an der Manteloberfläche jederzeit erkennen.

In einer weiteren besonders bevorzugten Ausführungsform der Erfindung ist ein Teilbereich der Schulter eines aus einem Schlauch gebildeten Kartuschenvorprodukts derart in das Kartuscheninnere irreversibel verlagert, dass zumindest in einem Teilbereich das erste Ende hinterschnitten an der Kartusche ausgebildet ist, wobei der Randbereich des hinterschnittenen ersten Endes aus einem Teilbereich der Schulter oder aus einem Teilbereich der Schulter und des daran anschliessenden Mantels des Kartuschenvorprodukts durch Biegen und/oder Stauchen gebildet ist. Im Vergleich zu einer handelsüblichen spritzgegossenen Kartusche erreicht die vorliegende coextrudierte Kartusche die nötigen Barriereeigenschaften für eine lange Produktlagerfähigkeit mit einem geringengeren Materialeinsatz. Dies kann jedoch die Stabilität der Kartusche reduzieren, wodurch beispielsweise ein Falltest nicht bestanden wird. Das Verschieben der Schulter in das Kartuscheninnere führt zu einem signifkanten Steigerung der mechanischen Stabilität des ersten Endes. Dies liegt an der Verdoppelung der Mantelwand am ersten Ende. Zusätzlich kann die Stabilität noch dadurch gesteigert werden, dass die beiden aneinander liegenden Mantelwände miteinander verschweisst oder verklebt werden. Die mechanische Stabilität kann auch dadurch erhöht werden, dass der unterste Bereich des Mantels zusätzlich zu dem Schulterbereich in das Kartuscheninnere verschoben bzw. verbogen wird. Dadurch erhält die «Doppelwand» eine vergrösserte Höhe bzw. Fläche.

In einer weiteren besonders bevorzugten Ausführungsform der Erfindung weist das offene Ende einen Rand auf, welcher durch das Abschneiden eines Endstückes der Kartusche gebildet ist. Das Abschneiden des Randstückes liefert einen sauber definierten Rand, welcher durch Trimmen noch exakter gemacht werden kann. Ein weiterer Vorteil der Entfernung des Randstückes ist, dass der Mantel eine beliebige Länge haben kann, je nachdem wie lange das abgeschnittene Randstück ist. So können auf einfache Weise, ohne das Werkzeug ändern zu müssen, Kartuschen mit unterschiedlichen Volumina hergestellt werden. Die Kartusche ist jedoch soweit zu kürzen, dass sie in eine Kartuschenpresse einsetzbar ist.

Zweckmässigerweise besitzt der Rand eine umlaufende Stufe. Diese Stufe lässt sich mit einem Rotationsschneider herstellen und hat den Vorteil, dass die Stufe als Haftfläche für eine Versiegelung des offenen zweiten Endes dienen kann. Die Versiegelung kann beispielsweise eine Aluminiumfolie sein und bewirkt eine Verlängerung der Produkthaltbarkeit vor dem ersten Öffnen, da die Kartusche am offenen Ende zweifach durch den Kolben und die Versiegelung abgedichtet ist.

Zweckmässigerweise ist der Kunststoff der ersten und zweiten Schicht ein HDPE oder ein extrusionsfähiges PET, welche sich gut coextrudieren lassen und gute Barriereeigenschaften aufweisen. Das extrusionsfähige PET kann beispielsweise x-PET oder g-PET sein.

Ein weiterer Aspekt der Erfindung betrifft ein Set aus einer Kartusche gemäss der obigen Beschreibung, einem Kolben, welcher nach Befüllung der Kartusche in das zweite Ende einschiebbar ist und einer Düse mit einem Innengewinde, welche Düse auf das Aussengewinde des Entnahmeelements aufschraubbar ist. Dadurch lässt sich die Kartusche beim Produkthersteller zuverlässig abdichten und kann vom Benutzer mehrfach benutzt werden.

Ein weiterer Aspekt der Erfindung betrifft ein Verfahren zur Herstellung der oben beschriebenen Kartusche nach dem Coextrusionsblasformen, welches auch ein Recyclingverfahren für restentleerte Kartuschen beinhaltet.

Die Erfindung zeichnet sich dadurch aus, dass ein neuer Kunststoff und ein recycelter Kunststoff aufgeschmolzen werden und zu einer ersten und zweiten Schicht coextrudiert werden. Dadurch lassen sich in der Art eines Compound-Werkstoffes die Vorteile der ersten und der zweiten Schicht kombinieren.

Das erfinderische Verfahren zeichnet sich zusätzlich dadurch aus, dass ein weiterer neuer Kunststoff in einer dritten Schicht coextrudiert wird, wobei die zweite Schicht zwischen die erste und die dritte Schicht extrudiert wird. Dadurch lässt sich eine innere Mantelfläche herstellen, an der der Kolben leicht und zuverlässig dichtend gleiten kann.

In einer besonders bevorzugten Ausführungsform der Erfindung stammt der recycelte Kunststoff aus einem Recyclingstrom von restentleerten wiederverwerteten im Coextrusionsblasen hergestellten Kartuschen. Dadurch lassen sich die gebrauchten Kartuschen in idealerweise wiederverwerten und ein geschlossener Recyclingstrom ist gebildet.

In vorteilhafter Weise wird der recycelte Kunststoff von Produktresten befreit und wird dem entsprechenden Extruder zur Herstellung der zweiten Schicht als Flakes oder Granulat aufgegeben. Dadurch lassen sich bekannte und technisch ausgereifte Recyclingverfahren nutzen, um die entleerten Kartuschen zur Herstellung der zweiten Schicht zu verwenden.

Zweckmässigerweise wird ein Kunststoff mit Barriereeigenschaften, bevorzugt ein Ethylen-Vinylalkohol-Copolymer, als eine Barriereschicht coextrudiert, wobei die Barriereschicht zwischen einer ersten und zweiten Klebeschicht coextrudiert wird. Dadurch kann das Produkt nicht mit Luftsauerstoff reagieren und nicht austrocknen und ist dementsprechend lange lagerfähig. Durch die Klebeschichten ist die Barriereschicht in dem Schichtenverbund fest eingebettet.

In einer weiteren besonders bevorzugten Ausführungsform der Erfindung wird ein Kartuschenvorprodukt gebildet, indem der Schlauch in der Blasform ein erstes eine Schulter aufweisendes geschlossenes Ende und ein zweites offenes Ende erhält, die Kartusche über das zweite Ende aufgeblasen wird und an dem ersten Endeein Entnahmeelement ausgeformt wird. Dadurch lassen sich alle Elemente der Kartusche in der Blasform ausbilden. Der Boden muss nicht, wie bei EBM-Verfahren üblich, durch Verquetschen geschlossen werden, sondern das zweite Ende kann in eleganter Weise offenbleiben, da es nach der Produktbefüllung durch den Kolben verschlossen wird.

Das erfindungsgemässe Verfahren zeichnet sich auch dadurch aus, dass ein Schieber der Blasform von einer ersten Position, in der das erste Ende des Kartuschenvorprodukts geformt wurde, in eine zweite Position verschoben wird, in der zumindest ein Teilbereich des ersten Endes derart in das Kartuscheninnere irreversibel verlagert wird, dass zumindest in einem Teilbereich ein hinterschnittenes erstes Ende an der Kartusche ausgebildet wird, wobei der Randbereich des hinterschnittenen ersten Endes aus einem Teilbereich der Schulter oder aus einem Teilbereich der Schulter und des daran anschliessenden Mantels des Kartuschenvorprodukts durch Biegen und/oder Stauchen gebildet wird. Durch diesen Verfahrensschritt lässt sich die mechanische Stabilität der Kartusche verbessern, wie dies weiter oben bereits ausführlich dargelegt wurde.

Die Erfindung zeichnet sich auch dadurch aus, dass zur Ausformung eines definierten Randes an dem zweiten Ende ein Endstück der Kartusche abgeschnitten wird, wodurch gleichzeitig die Länge der Kartusche bestimmt wird. Der Rand, welcher beim Extrusionsblasformen nicht exakt ausgeformt werden kann, erhält dadurch eine exakte Form. Gleichzeitig kann durch die gewählte Länge der Kartusche das Füllvolumen der Kartusche flexibel festgelegt werden und ist von der Form des Werkzeuges unabhängig. Allerdings ist es zweckmässig die Länge des Mantels derart zu wählen, dass die Kartusche in eine handelsübliche Kartuschenpresse passt.

In einer weitere besonders bevorzugten Ausführungsform der Erfindung wird das abgeschnittene Endstück dem Recyclingstrom zugeführt. Dadurch ist das sogenannte «verlorene» Endstück zweckmässig in das Herstellverfahren der Kartusche eingebunden.

Weitere Vorteile und Merkmale ergeben sich aus der nachfolgenden Beschreibung mehrerer Ausführungsbeispiele der Erfindung unter Bezugnahme auf die schematischen Darstellungen. Es zeigen in nicht massstabsgetreuer Darstellung:
- Figur 1:: eine perspektivische Ansicht einer Kartusche mit 3 Schichten, wobei die mittlere Schicht aus recyceltem Kartuschenmaterial extrudiert ist;
- Figur 2:: eine perspektivische Ansicht einer Kartusche, wobei die 3 Schichten aus Figur 1 durch eine Barriereschicht und zwei Klebeschichten ergänzt sind;
- Figur 3:: das erste Ende einer Kartusche mit einer abschneidbaren Kappe, welche mit einem Halteband an der Kartusche gehalten ist;
- Figur 4:: eine Kartusche mit einer Düse, welche Düse einstückig mit der Kartusche ausgebildet ist;
- Figur 5:: eine Kartusche mit einem transparenten Streifen zur Füllstandskontrolle;
- Figur 6:: eine Detailansicht des Randes des offenen Kartuschenendes in einer teilweisen Schnittansicht in einer ersten Ausführungsform;
- Figur 7:: eine Detailansicht des Randes des offenen Kartuschenendes in einer teilweisen Schnittansicht in einer zweiten Ausführungsform und einen Kolben zum Einschieben in das offene Kartuschenende;
- Figur 8:: das offene Kartuschenende verschlossen durch ein Siegelelement;
- Figur 9:: eine Schnittdarstellung eines Kartuschenvorproduktes ausgeformt in einer Blasform;
- Figur 10:: eine Schnittdarstellung der Kartusche in einer Ausführungsform, bei welcher das erste Ende mit einem Schieber ausgeformt wird;
- Figur 11:: eine Schnittdarstellung des Kartuschenvorproduktes und
- Figur 12:: eine Schnittdarstellung der Kartusche aus Figur 10 nach der Entformung aus der Blasform.

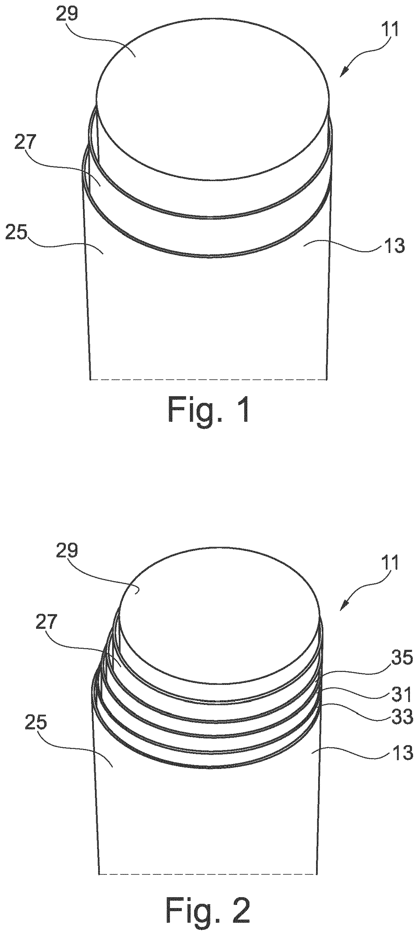

In den Figuren 1 bis 8 ist eine Kartusche oder Details der Kartusche gezeigt, welche gesamthaft mit dem Bezugszeichen 11 bezeichnet ist. Die Kartusche 11 weist einen zylindrischen Mantel 13 und ein Entnahmeelement auf, welches ein Fortsatz 15 oder eine Düse 17 sein kann. Die Kartusche ist coextrusionsblasgeformt, um eine Mehrzahl von Schichten auszubilden.

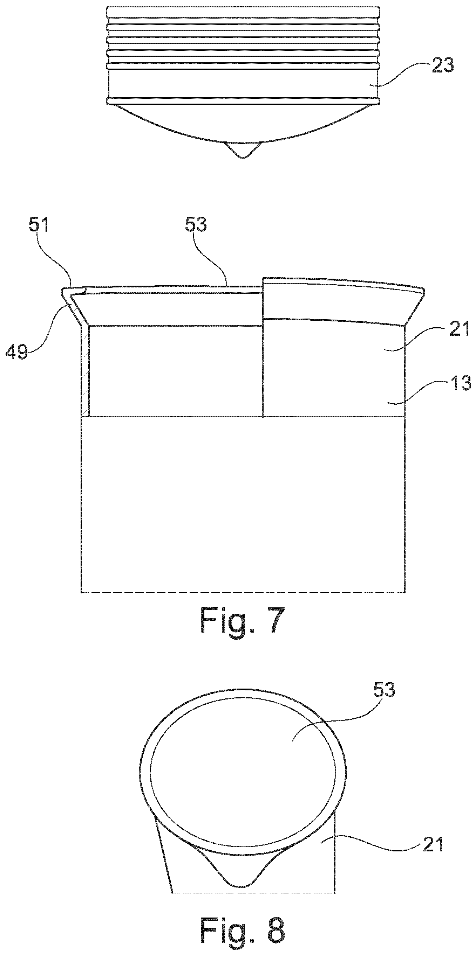

Der Mantel 13 hat ein erstes verschlossenes Ende 19 mit einer Schulter 20 und ein zweites offenes Ende 21. In die Kartusche 11 wird durch das zweite Ende 21 bzw. eine durch das zweite Ende 21 gebildete Einfüllöffnung 22 ein Produkt, beispielsweise Silikon, ein Acryldichtstoff oder ein Klebstoff, abgefüllt. Nach der Produktabfüllung wird das zweite Ende 21 mit einem Kolben 23 (Figur 7) verschlossen. Die Kartusche 11 ist derart bemasst, dass sie sich in eine handelsübliche Kartuschenpresse einsetzen lässt. Nach Öffnen des Entnahmeelements lässt sich der Kolben mit der Kartuschenpresse in den Mantel 13 drücken, um Produkt dosiert aus der Kartusche 11 zu pressen.

Die Kartusche 11 weist wenigstens eine erste äussere Schicht 25 und eine zweite innere Schicht 27 auf. Die erste Schicht 25 ist aus einem neuen Kunststoff, bevorzugt «virgin» HDPE coextrudiert. Die zweite Schicht 27 ist aus einem recycelten Kunststoff coextrudiert. Bevorzugt ist der recycelte Kunststoff aus restentleerten und entsorgten erfindungsgemässen Kartuschen 11 hergestellt. Es kann aber auch ein anderer recycelte Kunststoff, beispielsweise rHDPE, verwendet werden. Die zweite Schicht 27 ist von der ersten Schicht 25 abgedeckt, da es die überwiegenden Markbedürfnisse erfordern, dass eine Kartusche eine weisse Farbe hat. Dieses Farberfordernis kann mit vertretbarem Aufwand nur von einem neuen Kunststoff erfüllt werden, da ein recycelter Kunststoff immer farblich wirksame Verunreinigungen aufweist.

In der Figur 1 ist eine erste Ausführungsform mit drei coextrudierten Schichten gezeigt. Die zweite Schicht 27 ist zwischen der ersten Schicht 25 und einer dritten Schicht 29 aus neuem Kunststoff angeordnet. Die dritte Schicht 29 ist deshalb vorgesehen, da recycelter Kunststoff eine rauere Oberfläche als neuer Kunststoff besitzt. Die zweite Schicht 27 wäre daher ungeeignet den Mantel 13 gegenüber dem Kolben 23 zuverlässig abzudichten.

In der Figur 2 ist eine Ausführungsform mit einer zusätzlichen Barriereschicht 31 gezeigt. Die Barriereschicht 31 ist zwischen einer ersten und zweiten Klebeschicht 33,35 eingebettet. Die Klebeschichten 33,35 sind notwendig, um die Barriereschicht zuverlässig mit der ersten und zweiten Schicht 25,27 zu verbinden. Bevorzugt besteht die Barriereschicht 31 aus einem Ethylen-Vinylalkohol-Copolymer (EVOH) oder alternativ aus Polyamid (PA). Dadurch ist das in der Kartusche abgefüllte Produkt besonders gut über lange Zeit vor dem Austrocknen geschützt.

Die Summe der Schichtdicken ergibt die Wandstärke des Mantels, welche bevorzugt zwischen 0,7 und 2,1 mm liegt. Diese Wandstärke kann je nach Barriereeigenschaften einiges geringer sein als bei in Spritzguss hergestellten Kartuschen. Wird als Barriere EVOH oder PA verwendet, so ist zu bedenken, dass die Dichte dieser Materialen bei 1,2 -1,3 g/cm3 liegt und das HDPE beispielsweise eine Dichte von 0,95 g/cm3 aufweist. Somit liegt die Gewichtseinsparung bei einer Reduktion der Wandstärke um 50% bei einer solchen erfindungsgemäßen Kartusche nur bei etwa 20-30 % gegenüber herkömmlichen Kartuschen.

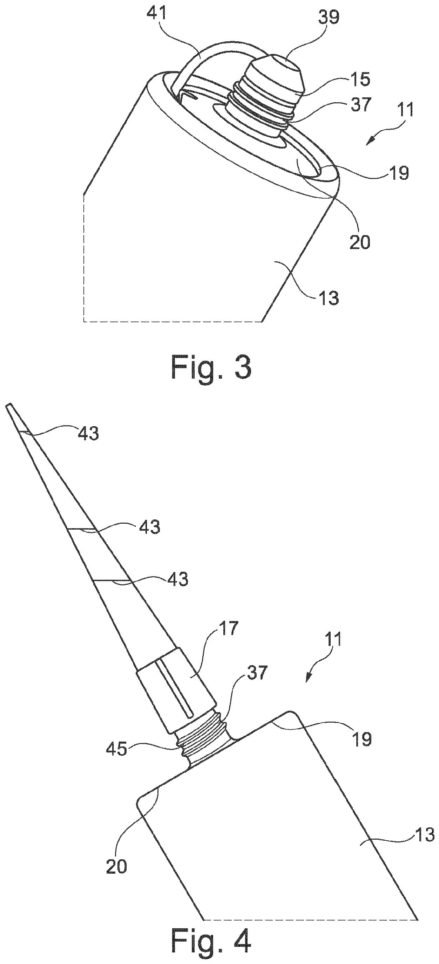

In der Figur 3 ist gezeigt, dass das Entnahmeelement der Fortsatz 15 mit einem Aussengewinde 37 ist. Der Fortsatz 15 weist auch eine abschneidbare Kappe 39 auf. Vor der ersten Anwendung der Kartusche 11 wird die Kappe 39 mit einer Klinge abgeschnitten, damit Produkt aus der Kartusche 11 gepresst werden kann. Damit die abgeschnittene Kappe 39 nicht getrennt entsorgt wird, ist sie mit einem Halteband 41 an dem ersten Ende 19 gehalten. Das Halteband 41 ist derart an dem ersten Ende 19 angeordnet, dass es einer separaten Düse nicht im Weg ist, welche auf den Fortsatz 15 aufgeschraubt wird.

In der Figur 4 ist eine Ausführungsform gezeigt, bei welcher die Düse 17 einstückig mit dem Mantel 13 ausgebildet ist. Die Düse 17 verjüngt sich von dem ersten Ende 19 weg und ihr freies Ende ist verschlossen, damit die Kartusche 11 nach der Befüllung mit Produkt und Einsetzen des Kolbens 23 vollständig verschlossen ist. Diese Ausführungsform ist besonders praktisch, da bei dem ersten Gebrauch der Kartusche 11 keine separate Düse aufgeschraubt werden muss. Stattdessen ist eine der Schneidlinien 43 an der Düse 17 abzuschneiden. Die Schneidlinien 17 sind entlang der Längenerstreckung der Düse angeordnet. Je nachdem wie gross der Innendurchmesser der Düse 17 sein soll, ist eine der Schneidlinien zu wählen. An den Schneidlinien 43 kann der entsprechende Innendurchmesser der Düse 17 aufgedruckt sein.

An dem dem ersten Ende 19 zugewandten Ende der Düse 17 ist ein Verbindungsstück 45 mit einem Aussengewinde 37 ausgebildet. Nach der erstmaligen Benutzung der Kartusche 11 kann die Düse 17 am Übergang zum Verbindungsstück 45 abgeschnitten werden. Zur weiteren Verwendung der Kartusche 11 kann eine separate Düse auf das Verbindungsstück 45 aufgeschraubt werden.

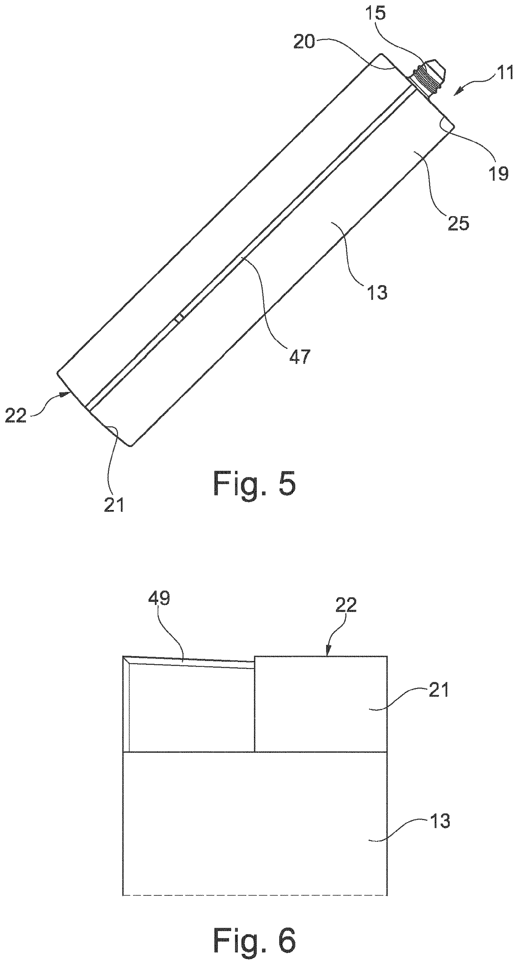

In der Figur 5 ist gezeigt, dass in Längsrichtung des Mantels 13 ein transparenter Streifen 47 zur Füllstandskontrolle des Produktes eingearbeitet ist. Dadurch kann visuell geprüft werden, an welcher Stelle der Mantelinnenseite sich der Kolben 23 befindet.

In der Blasform wird die Kartusche 11 über das offene Ende 21 aufgeblasen. Damit der Mantel nach dem Aufblasen einen definierten Rand 49 an dem offenen Ende 21 besitzt, wird ein Endstück des Mantels 13 abgeschnitten. Dadurch erhält der Mantel 13 nicht nur einen definierten Abschluss, sondern auch eine bestimmte Länge. Die Länge des Mantels 13 und das damit verbundene Füllvolumen der Kartusche 11 ist daher sehr einfach und flexibel herzustellen, indem für das abzuschneidende Endstück eine bestimmte Länge gewählt wird. In Figur 6 ist ein Rand 49 gezeigt, welcher geschnitten und getrimmt ist und dadurch eine saubere Kante aufweist. Das Endstück kann auch mit einem Rotationsschneider abgeschnitten werden, wodurch ein Rand 49 mit einer abgesetzten Stufe 51 entsteht. Auf die Stufe 51 kann ein Siegelelement 53, zum Beispiel eine Aluminiumfolie, aufgesiegelt werden. Dadurch ist das offene zweite Ende 21 hermetisch verschlossen und das Produkt ist im originalverschlossenen Zustand sehr lange in der Kartusche haltbar.

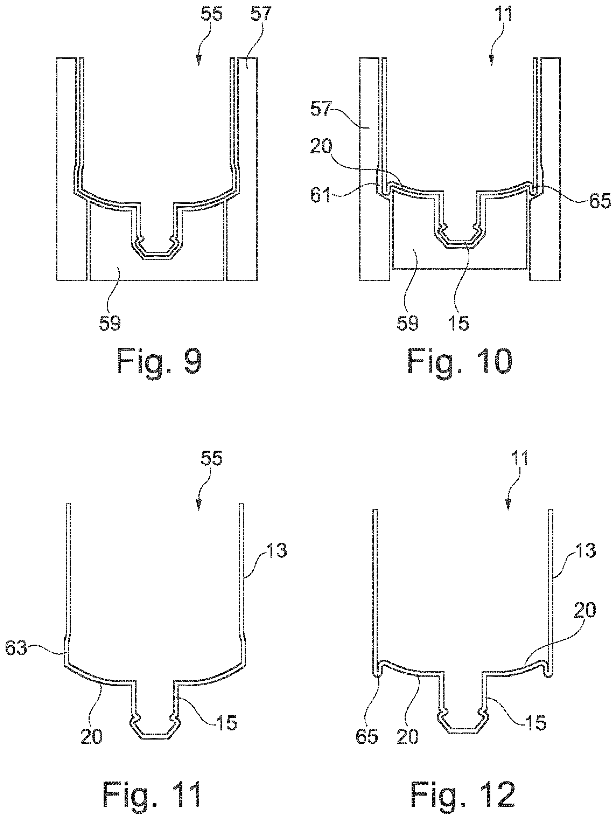

In den Figuren 9 bis 12 ist eine Ausführungsform der Kartusche 11 gezeigt, bei welcher das erste Ende 19 verstärkt ist. Diese Verstärkung ist für die coextrudierte Kartusche 11 von Bedeutung, da diese durch die coextrudierten Schichten eine geringere Stabilität als spritzgegossene Kartuschen mit erhöhtem Materialeinsatz zur Erreichung der notwendigen Barriereeigenschaften hat.

In der Figur 9 und 11 ist ein Kartuschenvorprodukt 55 gezeigt, welches in einer Blasform 57 aus dem coextrudierten Schlauch geblasen wird. Die Blasform 57 weist am unteren Ende, an welchem das erste Ende 19 ausgeformt wird, einen Schieber 59 auf, an welchem auch der Fortsatz 15 ausgeformt wird. Der Schieber 59 lässt sich aus einer ersten in der Figur 9 gezeigten Position in eine zweite in der Figur 10 gezeigte Position verschieben. In der ersten Position wird das Kartuschenvorprodukt 55 bzw. das erste Ende 19 geformt. An den Schieber anschliessend ist an dem Mantel 13 der Blasform eine ringförmige Vertiefung 61 vorgesehen. Durch die Vertiefung 61 wird an dem Kartuschenvorprodukt 55 eine Ausbuchtung 63 geformt.

Beim Verschieben des Schiebers 59 in die zweite Position wird die Schulter 20 in das Innere des Kartuschenvorproduktes 55 verlagert bzw. gebogen, wodurch die Kartusche 11 entsteht. Dadurch erhält das erste Ende 19 eine Hinterschneidung 65, welche die mechanische Stabilität des ersten Endes 19 und der ganzen Kartusche 11 verbessert. Die Ausbuchtung 63 wandert beim Verlagern der Schulter 20 radial nach innen, wodurch die Schulter 20 mehr Material zur Bildung der Hinterschneidung 65 erhält. Die Hinterschneidung besitzt eine Höhe zwischen 2 und 10 mm und bevorzugt zwischen 2 und 5 mm. Der in das innere der Kartusche 11 verlagerte Randbereich der Schulter 20 liegt dabei an der Innenseite des Mantels 13 an und ist bevorzugt mit diesem verschweisst oder verklebt.

Möglich ist es auch, dass der Schieber 59 noch weiter in das Innere der Kartusche 11 verschoben wird. Dadurch wird auch ein Teilbereich des Mantels 13, welcher an die Schulter 20 anschliesst, zur Bildung der Hinterschneidung 65 herangezogen. Der Teilbereich des Mantels 13 wird ebenfalls nach innen gebogen. Dementsprechend liegt auch der Teilbereich des Mantels 13 an der Mantelinnenfläche an und kann mit dieser verschweisst oder verklebt sein. Das tiefere Verlagern des Schiebers 59 erhöht die mechanische Stabilität des ersten Endes 19. Die Hinterschneidung 65 besitzt in diesem Fall eine Höhe zwischen 10 und 20 mm.

Das Verfahren zur Herstellung der Kartusche 11 beinhaltet auch ein Recyclingverfahren, bei welchem gebrauchte und restentleerte Kartuschen 11 zur Herstellung der zweiten Schicht 27 herangezogen werden. Zur Herstellung der zweiten Schicht können auch andere Recyclingströme genutzt werden, es ist jedoch bevorzugt primär gebrauchte Kartuschen 11 zu verwenden, um einen geschlossenen Produktkreislauf zu erhalten.

Die gebrauchten Kartuschen 11 werden gereinigt, also von Produktresten befreit und als Flakes oder Granulat in einem Extruder aufgeschmolzen und extrudiert. In weiteren Extrudern wird nach dem Coextrusionsblasverfahren das benötigte Kunststoffausgangsmaterial für die Schichten 25,29,31,33 und 35 bereitgestellt. Die Kunststoffe werden in einem Speicherkopf zusammengeführt und zu einem mehrschichtigen Schlauch coextrudiert. Der mehrschichtige Schlauch wird in einer Blasform, welche ein geteiltes Werkzeug ist und die Negativform der Kartusche besitzt, aufgeblasen. Dabei erhält die Kartusche 11 in der Blasform das erste geschlossene Ende 19 und das zweite offene Ende 21. Über das zweite Ende 21 wird die Kartusche 11 aufgeblasen und an dem ersten Ende 19 wird das Entnahmeelement in Gestalt des Fortsatzes 15 oder der Düse 17 ausgeformt.

Wie weiter oben beschrieben, wird ein Endstück des Mantels abgeschnitten, um eine bestimmte Länge der Kartusche 11 und einen definierten Rand 49 zu erhalten. Das abgeschnittene Endstück kann dem Recyclingstrom zugeführt werden und daher zur Herstellung der zweiten Schicht 27 einer neuen Kartusche 11 dienen.

### Legende:

- 11: Kartusche
- 13: Mantel
- 15: Fortsatz, Entnahmeelement
- 17: Düse; Entnahmeelement
- 19: Erstes Ende
- 20: Schulter
- 21: Zweites Ende
- 22: Einfüllöffnung
- 23: Kolben
- 25: Erste Schicht
- 27: Zweite Schicht
- 29: Dritte Schicht
- 31: Barriereschicht
- 33: Erste Klebeschicht
- 35: Zweite Klebeschicht
- 37: Aussengewinde
- 39: Kappe
- 41: Halteband
- 43: Schneidlinien
- 45: Verbindungsstück
- 47: Transparenter Streifen
- 49: Rand
- 51: Stufe
- 53: Siegelelement
- 55: Kartuschenvorprodukt
- 57: Blasform
- 59: Schieber
- 61: Ringförmige Vertiefung
- 63: Ausbuchtung
- 65: Hinterschneidung, Randbereich

## Patentansprüche

1. Kartusche (11) hergestellt aus einem Kunststoffmaterial zur Verwendung in einer handelsüblichen Kartuschenpresse aufweisend
- einen zylindrischen Mantel (13) mit einem ersten verschlossenen und eine Schulter (20) aufweisenden Ende (19) und einem zweiten offenen Ende (21), wobei das offene Ende (21) eine Einfüllöffnung (22) bildet und in das offene Ende (21) ein mit der Kartuschenpresse in Richtung des ersten Endes verschiebbarer Kolben (23) einsetzbar ist, und
- ein an dem ersten Ende (19) ausgeformtes und verschlossenes Entnahmeelement (15,17) zur Entnahme von in der Kartusche (11) abgefülltem Produkt, welches Entnahmeelement (15,17) einstückig mit dem Mantel (13) ausgebildet ist, wobei die Kartusche (11) coextrusionsblasgeformt ist und wenigstens eine erste äussere und eine zweite innere coextrudierte Schicht (25,27) aufweist,
**dadurch gekennzeichnet,**
- **dass** die zweite Schicht (27) aus einem recycelten Kunststoff besteht und
- **dass** die Kartusche (11) eine dritte Schicht (29) aufweist, welche aus einem neuen Kunststoff hergestellt ist und dass die zweite Schicht (27) zwischen der ersten und der dritten Schicht (25,29) angeordnet ist.

2. Kartusche nach Anspruch 1, **dadurch gekennzeichnet, dass** die erste Schicht (25) aus einem neuen Kunststoff, bevorzugt in weisser Farbe, hergestellt ist.

3. Kartusche nach einem der vorangehenden Ansprüche, **dadurch gekennzeichnet, dass** die Kartusche (11) eine Barriereschicht (31) aufweist, welche zwischen einer ersten und zweiten Klebeschicht (33,35) angeordnet ist und die Barriereschicht (31) mitsamt der Klebeschichten (3,35) innerhalb der ersten Schicht (25) angeordnet ist.

4. Kartusche nach Anspruch 3, **dadurch gekennzeichnet, dass** die Barriereschicht (31) mitsamt der Klebeschichten (33,35) zwischen der ersten und der zweiten Schicht (25,27) angeordnet ist.

5. Kartusche nach Anspruch 3 oder 4, **dadurch gekennzeichnet, dass** die Barriereschicht (31) aus Ethylen-Vinylalkohol-Copolymer (EVOH) oder Polyamid besteht.

6. Kartusche nach einem der vorangehenden Ansprüche, **dadurch gekennzeichnet, dass** die erste Schicht (25) und die dritte Schicht (29) jeweils höchstens 20 Gew% des Kartuschengewichts ausmachen und die dritte Schicht bis zu 80 Gew% des Kartuschengewichts ausmacht.

7. Kartusche nach einem der vorangehenden Ansprüche, **dadurch gekennzeichnet, dass** die Wandstärke des Mantels (13), welche sich aus der Summe der Schichtdicken ergibt, bevorzugt zwischen 0,7 mm und 2,1 mm und bevorzugt zwischen 0,9 mm und 1,5 mm beträgt.

8. Kartusche nach einem der vorangehenden Ansprüche, **dadurch gekennzeichnet, dass** ein Teilbereich der Schulter (20) eines aus einem Schlauch gebildeten Kartuschenvorprodukts (55) derart in das Kartuscheninnere irreversibel verlagert ist, dass zumindest in einem Teilbereich das erste Ende (19) hinterschnitten an der Kartusche (11) ausgebildet ist, wobei der Randbereich (65) des hinterschnittenen ersten Endes aus einem Teilbereich der Schulter (20) oder aus einem Teilbereich der Schulter (20) und des daran anschliessenden Mantels (13) des Kartuschenvorprodukts (55) durch Biegen und/oder Stauchen gebildet ist.

9. Kartusche nach einem der vorangehenden Ansprüche, **dadurch gekennzeichnet, dass** das offene Ende (21) einen Rand (49) aufweist, welcher durch das Abschneiden eines Endstückes der Kartusche (11) gebildet ist und bevorzugteine umlaufende Stufe (51) besitzt.

10. Kartusche nach einem der vorangehenden Ansprüche, **dadurch gekennzeichnet, dass** der Kunststoff der ersten und zweiten Schicht ein HDPE oder ein extrusionsfähiges PET ist.

11. Set aus einer Kartusche (11) gemäss einem der vorangehenden Ansprüche, einem Kolben (23), welcher nach Befüllung der Kartusche (11) in das zweite Ende (21) einschiebbar ist und einer Düse mit einem Innengewinde, welche Düse auf das Aussengewinde des Entnahmeelements aufschraubbar ist.

12. Verfahren zur Herstellung einer Kartusche (11) gemäss der vorangehenden Ansprüche nach dem Coextrusionsblasformen wobei
- in mehreren Extrudern unterschiedliche Kunststoffe aufgeschmolzen werden,
- die Kunststoffe in einem Speicherkopf zusammengeführt werden,
- zu einem mehrschichtigen Schlauch coextrudiert werden,
- der Schlauch in einer Blasform (57), welche ein geteiltes Werkzeug ist und die Negativform der Kartusche (11) besitzt, aufgeblasen wird,
**dadurch gekennzeichnet,**
**dass** ein neuer Kunststoff und ein recycelte Kunststoff aufgeschmolzen werden und zu einer ersten und zweiten Schicht (25,27) coextrudiert werden und
**dass** ein weiterer neuer Kunststoff in einer dritten Schicht (29) coextrudiert wird, wobei die zweite Schicht (27) zwischen die erste und die dritte Schicht (25,29) extrudiert wird.

13. Verfahren nach Anspruch 12, **dadurch gekennzeichnet, dass** der recycelte Kunststoff aus einem Recyclingstrom von restentleerten wiederverwerteten im Coextrusionsblasen hergestellten Kartuschen (11) stammt.

14. Verfahren nach Anspruch 12 oder 13, **dadurch gekennzeichnet, dass** der recycelte Kunststoff von Produktresten befreit wird und dem entsprechenden Extruder zur Herstellung der zweiten Schicht (27) als Flakes oder Granulat aufgegeben wird.

15. Verfahren nach einem der Ansprüche 12 bis 14, **dadurch gekennzeichnet, dass** ein Kunststoff mit Barriereeigenschaften, bevorzugt ein Ethylen-Vinylalkohol-Copolymer oder ein Polyamid, als eine Barriereschicht (31) coextrudiert wird, wobei die Barriereschicht (31) zwischen einer ersten und zweiten Klebeschicht (33,35) coextrudiert wird.

16. Verfahren nach einem der Ansprüche 12 bis 15, **dadurch gekennzeichnet, dass** ein Kartuschenvorprodukt (55) gebildet wird (11), indem der Schlauch in der Blasform (57) ein erstes eine Schulter aufweisendes geschlossenes Ende (19) und ein zweites offenes Ende (21) erhält, die Kartusche (11) über das zweite Ende (21) aufgeblasen wird und an dem ersten Ende (19) ein Entnahmeelement (15,17) ausgeformt wird.

17. Verfahren nach Anspruch 16, **dadurch gekennzeichnet, dass** ein Schieber (59) der Blasform (57) von einer ersten Position, in der das erste Ende des Kartuschenvorprodukts (55) geformt wurde, in eine zweite Position verschoben wird, in der zumindest ein Teilbereich des ersten Endes (19) derart in das Kartuscheninnere irreversibel verlagert wird, dass zumindest in einem Teilbereich ein hinterschnittenes erstes Ende (19) an der Kartusche (11) ausgebildet wird, wobei der Randbereich (65) des hinterschnittenen ersten Endes (19) aus einem Teilbereich der Schulter (20) oder aus einem Teilbereich der Schulter (20) und des daran anschliessenden Mantels (13) des Kartuschenvorprodukts (55) durch Biegen und/oder Stauchen gebildet wird.

## Claims

1. Cartridge (11) produced from a plastic material to be used in a commercially available cartridge press comprising:
- a cylindrical sheath (13) with a first closed end (19) comprising a shoulder (20) and a second open end (21), wherein the open end (21) forms a filling opening (22) and a piston (23) that is displaceable with the cartridge press in direction of the first end can be inserted into the open end (21) and
- a withdrawal element (15, 17) closed and molded at the first end (19) for withdrawing the product filled in the cartridge (11), which withdrawal element (15, 17) is integrally formed with the sheath (13), wherein the cartridge (11) is coextrusion blow molded and comprises at least a first outer and a second coextruded layer (25, 27),
**characterized in**
- **that** the second layer (27) is made of a recycled plastic material and
- **that** the cartridge (11) comprises a third layer (29) that is produced from a new plastic material and that the second layer (27) is arranged between the first and the third layer (25, 29).

2. Cartridge according to claim 1, **characterized in that** the first layer (25) is produced from a new plastic material, preferably of white color.

3. Cartridge according to one of the preceding claims, **characterized in that** the cartridge (11) comprises a barrier layer (31) that is arranged between a first and a second adhesive layer (33, 35) and the barrier layer (31) is arranged with the adhesive layers (33, 35) inside the first layer (25).

4. Cartridge according to claim 3, **characterized in that** the barrier layer (31) is arranged with the adhesive layers (33, 35) between the first and the second layer (25, 27).

5. Cartridge according to claim 3 or 4, **characterized in that** the barrier layer (31) is made of ethylene-vinyl alcohol copolymer (EVOH) or polyamide.

6. Cartridge according to one of the preceding claims, **characterized in that** the first layer (25) and the third layer (29) represent a maximum of respectively 20 weight percent of the cartridge weight and the third layer up to 80 weight percent of the cartridge weight.

7. Cartridge according to one of the preceding claims, **characterized in that** the wall thickness of the sheath (13) that result from the sum of the layer thicknesses is preferably between 0,7 mm and 2,1 mm and preferably between 0,9 mm and 1,5 mm.

8. Cartridge according to one of the preceding claims, **characterized in that** a partial area of the shoulder (20) of a cartridge primary product (55) made of a hose is irreversibly displaced into the cartridge inside in such a manner that the first end (19) is configured undercut at the cartridge (11) at least in a partial area, wherein the edge area (65) of the undercut first end is formed from a partial area of the shoulder (20) or from a partial area of the shoulder (20) and of the adjoining sheath (13) of the cartridge primary product (55) by bending and/or compression.

9. Cartridge according to one of the preceding claims, **characterized in that** the open end (21) comprises an edge (49) that is formed by cutting an end piece of the cartridge (11) and preferably comprises a circumferential step (51).

10. Cartridge according to one of the preceding claims, **characterized in that** the plastic material of the first and of the second layer is a HDPE or an extrudable PET.

11. Set made of a cartridge (11) according to one of the preceding claims, a piston (23) that can be inserted into the second end (21) after filling of the cartridge (11) and a nozzle with an inner thread, which nozzle can be screwed onto the outer thread of the withdrawal element.

12. Method for producing a cartridge (11) according to one of the preceding claims according to the coextrusion blow molding procedure, wherein
- different plastic materials are melted in several extruders,
- the plastic materials are brought together in an accumulator head,
- are coextruded to a multilayered hose,
- the hose is blown in a blow mold that is a divided tool and has the negative form of the cartridge (11),
**characterized in**
**that** a new plastic material and a recycled plastic material are melted and coextruded to a first and a second layer (25, 27) and that a further new plastic material is coextruded in a third layer (29), wherein the second layer (27) is extruded between the first and the third layer (25, 29).

13. Method according to claim 12, **characterized in that** the recycled plastic material originates from a recycling flow of reused cartridges (11) without any residuals produced according to the coextrusion blow molding procedure.

14. Method according to claim 12 or 13, **characterized in that** the recycled plastic material is freed from product rests and is fed to the corresponding extruder for producing the second layer (27) as flakes or granules.

15. Method according to one of the claims 12 to 14, **characterized in that** a plastic material with barrier properties, preferably an ethylene-vinyl alcohol copolymer or a polyamide is coextruded as a barrier layer (31), wherein the barrier layer (31) is coextruded between a first and a second adhesive layer (33, 35).

16. Method according to one of the claims 12 to 15, **characterized in that** a cartridge primary product (55) is formed, wherein the hose in the blow mold receives a first closed end (19) comprising a shoulder and a second open end (21), the cartridge (11) is blown over the second end (21) and a withdrawal element (!5, 17) is molded at the first end (19).

17. Method according to claim 16, **characterized in that** a slider (59) of the blow mold (57) is displaced from a first position, in which the first end of the cartridge primary product (55) has been formed, to a second position in which at least a partial area of the first end (19) is irreversibly displaced into the cartridge inside that an undercut first end is formed at least in a partial area, wherein the edge area (65) of the undercut first end (19) is formed from a partial area of the shoulder or from a partial area of the shoulder (20) and of the adjoining sheath (13) of the cartridge primary product (55) by bending and/or compression.

## Revendications

1. Cartouche (11), fabriquée en une matière plastique pour être utilisée dans un pistolet à cartouche disponible dans le commerce, qui présente :
- une enveloppe cylindrique (13) avec une première extrémité fermée (19) et qui présente un épaulement (20) et une seconde extrémité ouverte (21), l'extrémité ouverte (21) formant une ouverture de remplissage (22) et un piston (23) qui peut être déplacé avec le pistolet à cartouche en direction de la première extrémité pouvant être mis en place dans l'extrémité ouverte et
- un élément de prélèvement (15, 17) moulé à la première extrémité (19) et fermé pour le prélèvement de produit rempli dans la cartouche (11), lequel élément de prélèvement (15, 17) est configuré en une pièce avec l'enveloppe (13), cependant que la cartouche (11) est moulée par coextrusion-soufflage et présente au moins une première couche extérieure coextrudée et une seconde couche intérieure coextrudée (25, 27),
**caractérisée en ce**
- **que** la seconde couche (27) est constituée par une matière plastique recyclée et
- **que** la cartouche (11) présente une troisième couche (29) qui est fabriquée dans une matière plastique neuve et que la seconde couche (27) est placée entre la première et la troisième couche (25, 29).

2. Cartouche selon la revendication 1, **caractérisée en ce que** la première couche (25) est fabriquée dans une matière plastique neuve, de préférence de couleur blanche.

3. Cartouche selon l'une des revendications précédentes, **caractérisée en ce que** la cartouche (11) présente une couche barrière (31) qui est placée entre une première et une seconde couche adhésive (33, 35) et la couche barrière (31) est placée avec les couches adhésives (33, 35) à l'intérieur de la première couche (25).

4. Cartouche selon la revendication 3, **caractérisée en ce que** la couche barrière (31) est placée avec les couches adhésives (33, 35) entre la première et la seconde couche (25, 27).

5. Cartouche selon la revendication 3 ou 4, **caractérisée en ce que** la couche barrière (31) est constituée par un copolymère d'éthylène-alcool vinylique (EVOH) ou un polyamide.

6. Cartouche selon l'une des revendications précédentes, **caractérisée en ce que** la première couche (25) et la troisième couche font respectivement au plus 20 % en poids du poids de la cartouche et la troisième couche fait jusqu'à 80 % du poids de la cartouche.

7. Cartouche selon l'une des revendications précédentes, **caractérisée en ce que** l'épaisseur de paroi de l'enveloppe (13) qui résulte de la somme des épaisseurs de couche, est de préférence entre 0,7 mm et 2,1 mm et de préférence entre 0,9 mm et 1,5 mm.

8. Cartouche selon l'une des revendications précédentes, **caractérisée en ce qu'**une zone partielle de l'épaulement (20) d'un produit semi-fini de la cartouche (55) formé par un tuyau est déplacée de manière irréversible dans l'intérieur de la cartouche de telle manière que la première extrémité (19) est configurée en contre-dépouille sur la cartouche (11) au moins dans une zone partielle, cependant que la zone marginale (65) de la première extrémité en contre-dépouille est formée par une zone partielle de l'épaulement (20) ou par une zone partielle de l'épaulement (20) et de l'enveloppe (13) qui s'y rattache du produit semi-fini de la cartouche (55) par flexion et/ou compression.

9. Cartouche selon l'une des revendications précédentes, **caractérisée en ce que** l'extrémité ouverte (21) présente un bord (49) qui est formé en coupant un morceau d'extrémité de la cartouche (11) et possède de préférence un gradin périphérique (51).

10. Cartouche selon l'une des revendications précédentes, **caractérisée en ce que** la matière plastique de la première et de la seconde couche est un PEHD ou un PET extrudable.

11. Ensemble constitué par une cartouche selon l'une des revendications précédentes, un piston (23) qui peut être enfoncé dans la seconde extrémité (21) après remplissage de la cartouche (11) et une tuyère avec un filet intérieur, laquelle tuyère peut être vissée sur le filet extérieur de l'élément de prélèvement.

12. Procédé de fabrication d'une cartouche (11) selon l'une des revendications précédentes selon le procédé de moulage par coextrusion-soufflage, cependant que
- différentes matières plastiques sont fondues dans différentes extrudeuses,
- les matières plastiques sont réunies dans une tête d'accumulation,
- sont coextrudées en un tuyau multicouche,
- le tuyau est soufflé dans un moule de soufflage (57) qui possède un outil divisé et la forme négative de la cartouche (11),
**caractérisé en ce**
**qu'**une matière plastique neuve et une matière plastique recyclée sont fondues et coextrudées en une première et une seconde couche (25, 27) et qu'une autre matière plastique neuve est coextrudée dans une troisième couche (29), la seconde couche (27) étant extrudée entre la première et la troisième couche (25, 29).

13. Procédé selon la revendication 12, **caractérisé en ce que** la matière plastique recyclée provient d'un flux de recyclage de cartouches (11) valorisées, exemptes de tout résidu, fabriquées par coextrusion-soufflage.

14. Procédé selon la revendication 12 ou 13, **caractérisé en ce que** la matière plastique recyclée est débarrassée de restes de produit et est chargée dans l'extrudeuse correspondante pour la fabrication de la seconde couche (27) en tant que flocons ou granulés.

15. Procédé selon l'une des revendications 12 à 14, **caractérisé en ce qu'**une matière plastique avec des propriétés de barrière, de préférence un copolymère d'éthylène-alcool vinylique ou un polyamide est coextrudé en tant que couche barrière (31), cependant que la couche barrière (31) est coextrudée entre une première et une seconde couche adhésive (33, 35).

16. Procédé selon l'une des revendications 12 à 15, **caractérisé en ce qu'**un produit semi-fini de cartouche (55) est formé (11), le tuyau dans le moule de soufflage (57) recevant une première extrémité fermée (19) qui présente un épaulement et une seconde extrémité ouverte (21), la cartouche (11) est soufflée par la seconde extrémité (21) et un élément de prélèvement (15, 17) est moulé à la première extrémité (19).

17. Procédé selon la revendication 16, **caractérisé en ce qu'**un coulisseau (59) du moule de soufflage (57) est déplacé d'une première position, dans laquelle la première extrémité du produit semi-fini de cartouche (55) a été moulé, à une seconde position dans laquelle au moins une zone partielle de la première extrémité (19) est déplacée de manière irréversible dans l'intérieur de la cartouche de telle manière qu'une première extrémité en contre-dépouille (19) est configurée sur la cartouche (11) au moins dans une zone partielle, cependant que la zone marginale (65) de la première extrémité en contre-dépouille est formée par une zone partielle de l'épaulement (20) ou par une zone partielle de l'épaulement (20) et de l'enveloppe (13) qui s'y rattache du produit semi-fini de la cartouche (55) par flexion et/ou compression.
